# EUROPEAN PATENT APPLICATION

(11) **EP 2 429 195 A2**
(43) Date of publication of application: **14.03.2012**
(21) Application number: 11180901.8
(22) Date of filing: 12.09.2011
(51) Int. Cl.: H04N 9/31

(54) **Image display device and method of using the same**

(30) Priority: 13.09.2010 JP 2010204030
(71) Applicant: Panasonic Corporation, Kadoma-shi Osaka 571-8501 (JP)
(72) Inventor: Shiramizu, Takahisa, Osaka, 540-6207 (JP); Jikuya, Nobuo, Osaka, 540-6207 (JP)
(74) Representative: Unland, Jochen Hermann

(57) **Abstract**

An image display device (1) includes a housing that accommodates a plurality of laser light source devices (22, 23, 24) that emit laser light of respective colors, a light modulator (25), a projection optical system and a controller (101), a movable body that is ejectable from and retractable into the housing and includes at least the projection optical system, a first switch (106) that turns ON in a use state in which the movable body is ejected from the housing, and a second switch (107) that turns ON in response to an operation of an operating portion by a user. The laser light is emitted from the plurality of laser light source devices when both of the first switch and the second switch turn ON. Accordingly, laser light is securely prevented from being emitted in a nonuse state by a switch erroneously turned ON.

## Description

### BACKGROUND OF THE INVENTION

### 1. Field of the Invention

The present invention relates to an image display device using a light source. In particular, the present invention relates to an image display device that is suitable to be integrated into a portable electronic device and the image display device using a semiconductor laser as the light source.

### 2. Description of Related Art

In recent years, technology using a semiconductor laser as a light source of an image display device has received widespread attention. The semiconductor laser has a variety of advantages, compared with a mercury lamp which was used in a conventional image display device. The advantages include high color reproducibility, instant lighting-up capability, a long life time, high efficiency that allows reduction of power consumption, and easy miniaturization, and so on.

The advantages of the image display device using the semiconductor laser provide benefits when the image display device is integrated into a portable electronic device. For example, as described in Japanese Patent Application Publication No. 2007-316393, a technology that integrates an image display device using a semiconductor laser into a cellular phone is known.

In the image display device using a semiconductor laser as a light source, when the laser light is incident on eyes for a long time, the laser light may damage the eyes. Therefore, the user must be warned to handle the image display device with care. When a switch is erroneously turned on without the user's awareness, and thus laser light is emitted, the laser light may be incident on human eyes for a short period of time. Such a circumstance should preferably be avoided.

In particular, convenience can be improved when the image display device is integrated into a notebook information processing device and is drawn out therefrom at the time of use. According to the image display device having such a structure, an operation button can be prevented from being erroneously operated by contact with another object by providing the operation button at a position hidden by a housing when the image display device is stored in the information processing device. On the other hand, the operation button may be erroneously operated by a foreign object that is caught in the image display device when the image display device is stored in the housing. In order to avoid such a circumstance, a sufficient space may be provided above the operation button in a stored state. However, it is not easy to provide a sufficient space above the operation button because of the demands of a thin housing of the information processing device.

### SUMMARY OF THE INVENTION

In view of the above-described circumstances, the present invention provides an image display device that securely prevents laser light from being emitted by erroneously turning on a switch when the image display device is not in use.

In view of the above-described circumstances, an aspect of the present invention provides an image display device for displaying an image on a screen by emitting light, the image display device comprising: a housing; a movable body that is ejectable from and retractable into the housing, a light source device that is provided with the movable body and that is arranged for emiting the light; a projection optical system that is provided with the movable body or the housing and that is arranged for projecting on the screen the light emitted by the light source device, wherein the light source device is capable of emitting light while the movable body is ejected from the housing, and the light source device is not capable of emitting light while the movable body is retracted into the housing.

According to this configuration, the light is emitted only when the operation portion is operated in a state where the movable body is ejected from the housing. Accordingly, even if the operation portion is erroneously operated by a stuck foreign object, the light is not emitted. Thus, the light is securely prevented from being emitted in a nonuse state.

The image display device may further comprise a controller that is provided with the housing or the movable body and that is arranged for controlling emission of the light. The controller may be further arranged for detecting a first signal and a second signal. The first signal indicates that the movable body is ejected from the housing, and the second signal indicates that a operating portion is operated. The controller may be further arranged for causing the light source device to emit the light while the controller detects both the first and second signals. Accordingly, whether or not the movable body is ejected from the housing can be electrically detected.

The image display device may further comprise a first switch that is arranged for turning ON in a use state in which the movable body is ejected from the housing; and a second switch that is arranged for turning ON in response to an operation of an operating portion for the emission of the light. The light may be arranged for emitting from the light source device while both of the first switch and the second switch turn ON. Accordingly, the first switch can securely turn ON and OFF in accordance with the movement of the movable body that ejects from and retracts into the housing.

The image display device may further comprise a light modulator that is arranged for modulating the light emitted from the light source device based on an image signal; and a controller that is arranged for controlling the light source device and the light modulator. The light source device may include a plurality of light source devices that is arranged for emitting light of respective colors. The housing may accommodate the plurality of light source devices, the light modulator, the projection optical system and the controller. The movable body may include at least the projection optical system.

The operation portion of the second switch may be positioned on the movable body such that the operation portion is covered by the housing in a stored state in which the movable body is retracted into the housing, and is exposed in the use state in which the movable body is ejected from the housing. Thus, the operation portion is operable when the movable body is ejected from the housing, and is inoperable when the movable body is retracted into the housing. Accordingly, an erroneous operation of the operation portion by contact with another object can be prevented.

The movable body may include a first unit including at least the projection optical system, and a second unit that rotatably supports the first unit. The second unit may include the controller and the operation portion. Accordingly, a projection angle of laser light emitted from an optical engine unit can be adjusted and projected on a screen appropriately. Further, by providing the operation portion on a control unit (second unit), the operation portion can be prevented from rattling (shaking) during an operation of the operation portion, and thus, it is possible to make the operation of the operation portion easy. Moreover, by providing the controller and the operation portion on the control unit, it is possible to simplify the wiring between the second switch, which is operated by the operation portion, and the controller.

The image display device may be accommodated in a space provided in a notebook information processing device, such that the image display device is replaceable with an optical disc device. Accordingly, the convenience of the information processing device can be improved. In this circumstance, since there is a demand to make the housing of the information processing device thin, a large accommodation space cannot be secured. However, according to the above-described configuration, it is not necessary to secure a large gap in a periphery of the operation portion to prevent an erroneous operation of the operation portion by a stuck foreign object. Accordingly, design flexibility can be improved. The optical disc device performs at least one of recording and playing back of information in an optical disc, such as a blue-ray disc, DVD, a CD, etc.

The housing may have flat shape. Accordingly, even if the operation portion is erroneously operated by a stuck foreign object because of the flat shape, the light is not emitted. Thus, the light is securely prevented from being emitted in a nonuse state.

The light may be laser light. Accordingly, the laser light is securely prevented from being emitted in a nonuse state.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a perspective view of an image display device integrated into a notebook information processing device according to an embodiment of the present invention;
Fig. 2 is a schematic configuration diagram illustrating an optical engine unit according to the embodiment of the present invention;
Fig. 3 is a schematic diagram illustrating a state of laser light in a green laser light source device according to the embodiment of the present invention;
Fig. 4A is a perspective view of the image display device according to the embodiment of the present invention;
Fig. 4B is a perspective view of the image display device according to the embodiment of the present invention;
Fig. 5 is a block diagram illustrating a schematic configuration of the image display device according to the embodiment of the present invention;
Fig. 6 is a time chart illustrating states of output signals of a first switch and a second switch at the beginning of use of the image display device according the embodiment of the present invention;
Fig. 7 is a perspective view illustrating the image display device in a decomposed state;
Fig. 8A is a perspective view illustrating the first switch according to the embodiment of the present invention; and
Fig. 8B is a perspective view illustrating the first switch according to the embodiment of the present invention.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

The image display device according to an embodiment of the present invention will be described hereinafter with reference to the drawings. The embodiment described below is a preferred example of the present invention, and describes limitations of technically favorable conditions. However, the scope of the present invention is not limited to these conditions, unless the following description specifically limits the invention.

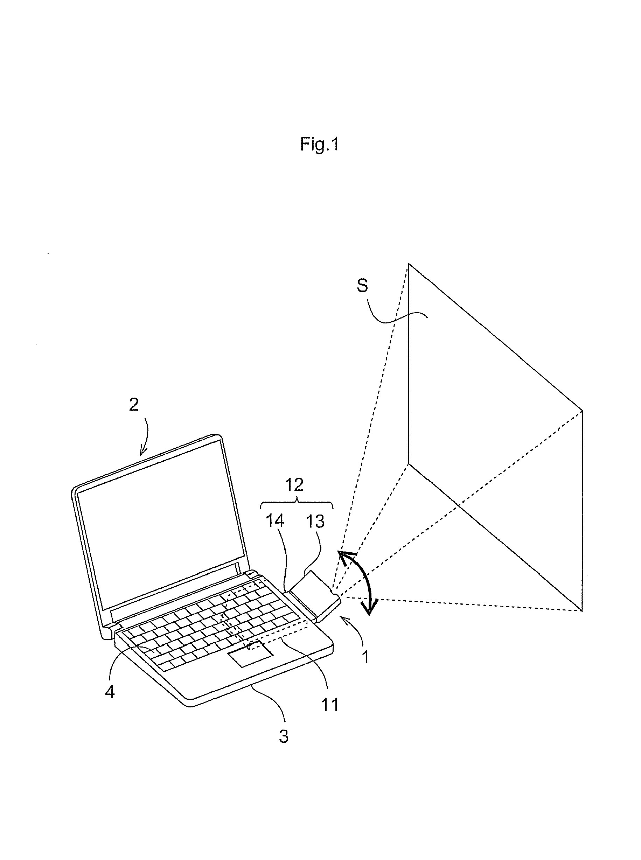

Fig. 1 is a perspective view of an image display device 1 integrated into a notebook information processing device 2 according to an embodiment of the present invention. In a body 3 of the information processing device 2, a drive bay is provided on a rear surface side of a keyboard 4. The drive bay is an accommodating space that accommodates a peripheral device, such as an optical disc device, etc., in a replaceable manner. The image display device 1 is attached to the drive bay.

The image display device 1 includes a housing 11 and a movable body 12 that is provided on the housing 11 to be retractable and ejectable. The movable body 12 includes an optical engine unit (first unit) 13 and a control unit (second unit) 14. The optical engine unit 13 accommodates optical components to project laser light on a screen S. The control unit 14 accommodates a printed board, etc., to control the optical components in the optical engine unit 13. The optical engine unit 13 is supported by the control unit 14 so as to be rotatable in a vertical direction.

When the image display device 1 is not used, the movable body 12 is stored in the housing 11. When the image display device 1 is used, the movable body 12 is drawn out from the housing 11, and the optical engine unit 13 is rotated to adjust the projection angle of laser light emitted from the optical engine unit 13, such that the laser light can be appropriately projected on the screen S.

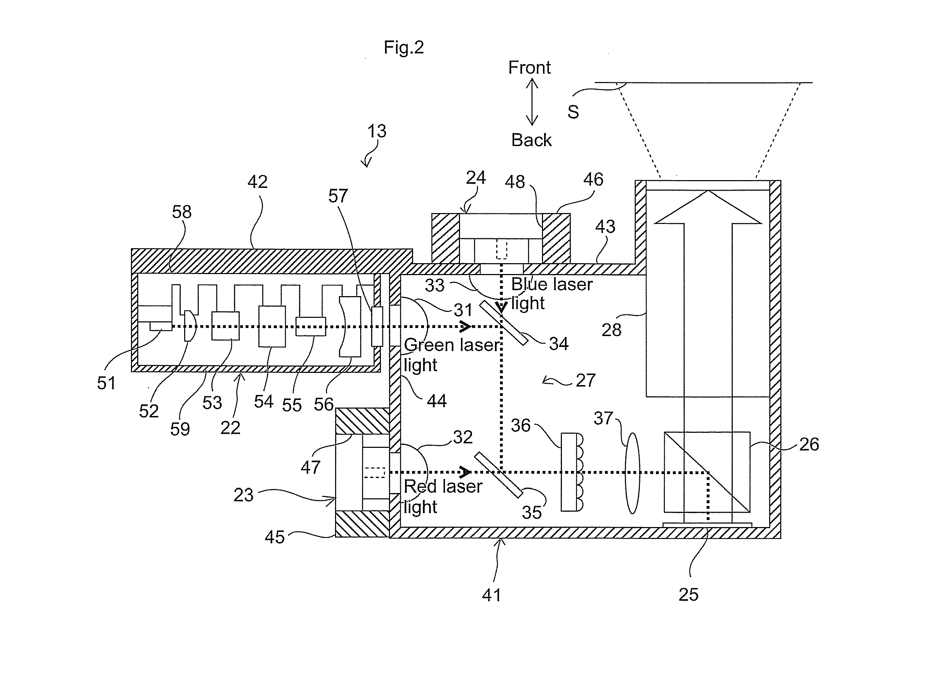

Fig. 2 is a schematic configuration diagram illustrating the optical engine unit 13. The optical engine unit 13 includes a green laser light source device 22 that outputs green laser light, a red laser light source device 23 that outputs red laser light, a blue laser light source device 24 that outputs blue laser light, a reflective liquid crystal light modulator 25 that modulates the laser light output from each of the laser light source devices 22 - 24 according to image signals, a polarizing beam splitter 26 that reflects the laser light output from each of the laser light source devices 22 - 24 to illuminate the light modulator 25, and transmits modulated laser light output from the light modulator 25, a relay optical system 27 that guides the laser light output from each of the laser light source devices 22 - 24 to the polarizing beam splitter 26, and a projection optical system 28 that projects the modulated laser light transmitted through the polarizing beam splitter 26 on the screen S.

The optical engine unit 13 displays color images using a field sequential method. Thus, the laser light source devices 22 - 24 sequentially output laser light of respective colors in time division, and images formed by the laser light of respective colors are recognized as a color image due to the visual residual image effect.

The relay optical system 27 includes collimator lenses 31 - 33 that convert the laser light of colors respectively output from the laser light source devices 22 - 24 into collimated beams, first and second dichroic mirrors 34 and 35 that guide the laser light of colors transmitted through the collimator lenses 31 - 33 in a predetermined direction, a diffuser panel 36 that diffuses the laser light guided by the dichroic mirrors 34 and 35, and a field lens 37 that converts the laser light transmitted through the diffuser panel 36 into a convergent laser.

Assuming that the direction in which the laser light is emitted from the projection optical system 28 to the screen S is a front side, the blue laser light source device 24 emits blue laser light backwards. The green laser light source device 22 and the red laser light source device 23 emit green laser light and red laser light, respectively, such that the optical axis of each of the green laser light and the red laser light is orthogonal to the optical axis of blue laser light. The blue laser light, the red laser light and the green laser light are guided to a common optical path by the two dichroic mirrors 34 and 35. In other words, the first dichroic mirror 34 guides the blue laser light and the green laser light to the common light path, and the second dichroic mirror 35 guides the blue laser light, the green laser light and the red laser light to the common light path.

Each of the first and second dichroic mirrors 34 and 35 has surfaces, on each of which a film is provided to transmit or reflect laser light of a predetermined wavelength. The first dichroic mirror 34 transmits blue laser light and reflects green laser light. The second dichroic mirror 35 transmits red laser light and reflects blue laser light and green laser light.

Each of these optical members is supported by a case 41. The case 41 serves as a heat dissipator that dissipates heat generated at each of the laser light source devices 22 - 24. The case 41 is made of a material having a high thermal conductivity, such as aluminum, copper, etc.

The green laser light source device 22 is attached to an attachment plate 42, which laterally extends from the case 41. The attachment plate 42 extends from a corner portion where a front wall portion 43 and a side wall portion 44 intersect with each other, in a direction perpendicular to the side wall portion 44. The front wall portion 43 and the side wall portion 44 are positioned at the front and side, respectively, of a space accommodating the relay optical system 27. The red laser light source device 23 is held by a holder 45 and is attached on an outer surface of the side wall portion 44. The blue laser light source device 24 is held by a holder 46 and is attached on an outer surface of the front wall portion 43.

Each of the red laser light source device 23 and the blue laser light source device 24 is made of a CAN package. Thus, a laser chip that outputs laser light is supported by a stem, and is positioned such that the optical axis is positioned on the central axis of the cylindrical exterior portion. Laser light is emitted from a glass window provided in an opening of the exterior portion. The red laser light source device 23 and the blue light source device 24 are pressed into attachment openings 47 and 48 in holders 45 and 46, respectively, to be fixed to the holders 45 and 46. Heat generated by the laser chip in each of the blue laser light source device 24 and the red laser light source device 23 is conducted to the case 41 through the holders 45 and 46, and then is dissipated. Each of the holders 45 and 46 is made of a material having a high thermal conductivity, such as aluminum, copper, etc.

The green laser light source device 22 includes a semiconductor laser 51, a FAC (Fast-Axis Collimator) lens 52, a rod lens 53, a solid laser element 54, a wavelength conversion element 55, a concave mirror 56, a glass cover 57, a base 58 and a cover member 59. The semiconductor laser 51 outputs laser light for excitation (excitation laser light). The FAC lens 52 and the rod lens 53 serve as collecting lenses that collect the excitation laser light output from the semiconductor laser 51. The solid laser element 54 is excited by the excitation laser light and outputs a fundamental laser light (infrared laser light). The wavelength conversion element 55 converts the wavelength of the fundamental laser light and outputs a half-wavelength laser light (green laser light). The concave mirror 56, together with the solid laser element 54, serves as a resonator. The glass cover 57 prevents the excitation laser light and the fundamental wavelength laser light from leaking. The base 58 supports each of the above-described portions, and the cover member 59 covers each of the above-described portions.

The green laser light source device 22 is attached to the case 41 by fixing the base 58 to the attachment plate 42. Thus, a gap with a desired width (e.g., equal to or less than 0.5 5 mm) is provided between the green laser light source device 22 and the side wall portion 44 of the case 41. By doing so, heat generated by the green laser light source device 22 is not easily transmitted to the red laser light source device 23. Thus, a rise in temperature in the red laser light source device 23 is reduced, and the red laser light source device 23, which has bad temperature characteristics, can operate stably. Further, to secure a desired adjustment allowance (e.g., about 0.3 mm) for the optical axis of the red laser light source device 23, a gap with a predetermined width (e.g., equal to or more than 0.3 mm) is provided between the green laser light source device 22 and the red laser light source device 23.

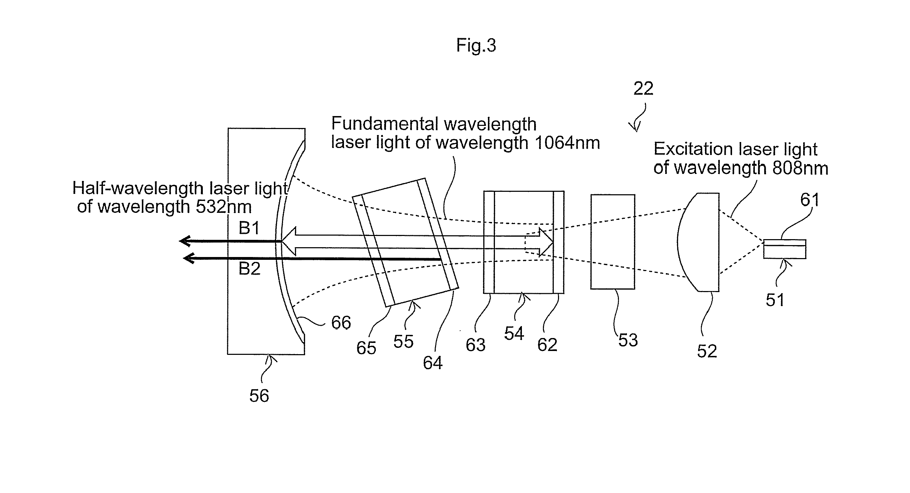

Fig. 3 is a schematic view illustrating a state of laser light in the green laser light source device 22. A laser chip 61 of the semiconductor laser 51 outputs excitation laser light having a wavelength of 808 nm. The FAC lens 52 reduces beam spread of the laser light in a fast axis (a direction perpendicular to the optical axis and parallel to the paper surface of the drawing). The rod lens 53 reduces beam spread of the laser light in a slow axis (a direction perpendicular to the paper surface of the drawing).

The solid laser element 54 is a solid-state laser crystal, which is excited by the excitation laser light of wavelength 808 nm passing through the rod lens 53, and outputs fundamental wavelength laser light (infrared laser light) having a wavelength of 1064 nm. The solid laser element 54 may be an inorganic optical active substance (crystal) made of YV0₄ (Y: yttrium and V0₄: vanadinite), doped with neodymium (Nd). More specifically, doping is performed by substituting Y of the base material YV0₄ by Nd⁺³, which is a phosphor material (an element that produces fluorescence).

A film 62 is provided on a side of the solid laser element 54 facing the rod lens 53. The film 62 prevents reflection of the excitation laser light of wavelength 808 nm, and provides high reflection for the fundamental wavelength laser light of wavelength 1064 nm and a half-wavelength laser light of wavelength 532 nm. A film 63 is provided on a side of the solid laser element 54 facing the wavelength conversion element 55. The film 63 prevents reflection of the fundamental wavelength laser light of wavelength 1064 nm and the half wavelength laser light of wavelength 532 nm.

The wavelength conversion element 55 is a SHG (Second Harmonics Generation) element, which converts the fundamental wavelength laser light (infrared laser light) of wavelength 1064 nm output from the solid laser element 54 and generates half-wavelength laser light (green laser light) of wavelength 532 nm.

A film 64 is provided on a side of the wavelength conversion element 55 facing the solid laser element 54. The film 64 prevents reflection of the fundamental wavelength laser light of wavelength 1064 nm, and provides high reflection for the half-wavelength laser light of wavelength 532 nm. A film 65 is provided on a side of the wavelength conversion element 55 facing the concave mirror 56. The film 65 prevents reflection of the fundamental wavelength laser light of wavelength 1064 nm and the half-wavelength laser light of wavelength 532 nm.

The concave mirror 56 has a concave surface on a side facing the wavelength conversion element 55. A film 66 is provided on the concave surface. The film 66 provides high reflection for the fundamental wavelength laser light of wavelength 1064 nm and prevents reflection of the half-wavelength laser light of wavelength 532 nm. Accordingly, the fundamental wavelength laser light of wavelength 1064 nm resonates between the film 62 of the solid laser element 54 and the film 66 of the concave mirror 56, and is amplified.

The wavelength conversion element 55 converts a portion of the fundamental wavelength laser light of wavelength 1064 nm incident thereon from the solid laser element 54 into the half-wavelength laser light of wavelength 532 nm. The fundamental wavelength laser light of wavelength 1064 nm that was not converted and passes through the wavelength conversion element 55 is reflected by the concave mirror 56 and is incident on the wavelength conversion element 55 again to be converted into the half-wavelength laser light of wavelength 532 nm. The half-wavelength laser light of wavelength 532 nm is reflected by the film 64 of the wavelength conversion element 55 and is output from the wavelength conversion element 55.

A beam B1 is laser light that is incident on the wavelength conversion element 55 from the solid laser element 54, is wavelength-converted by the wavelength conversion element 55, and is output from the wavelength conversion element 55. A beam B2 is laser light that is incident on the wavelength conversion element 55 after being reflected by the concave mirror 56, is reflected by the film 64 and is output from the wavelength conversion element 55. Under this condition, when beam B1 and beam B2 overlap each other, the output power is reduced, because the half-wavelength laser light of wavelength 532 nm interferes with the fundamental wavelength laser light of wavelength 1064 nm.

Therefore, the wavelength conversion element 55 is inclined with respect to the optical axis such that the laser light beams B1 and B2 do not overlap each other and thus the half wavelength laser light of wavelength 532 nm is prevented from interfering with the fundamental wavelength laser light of wavelength 1064 nm, due to the refraction effects of the incident surface and the output surface. Thus, the reduction in the output power can be prevented.

In addition, in order to prevent the excitation laser light of wavelength 808 nm and the fundamental wavelength laser light of 1064 nm from leaking to the exterior, a film that does not transmit the laser light having these wavelengths is provided on the glass cover 57, as shown in Fig. 2.

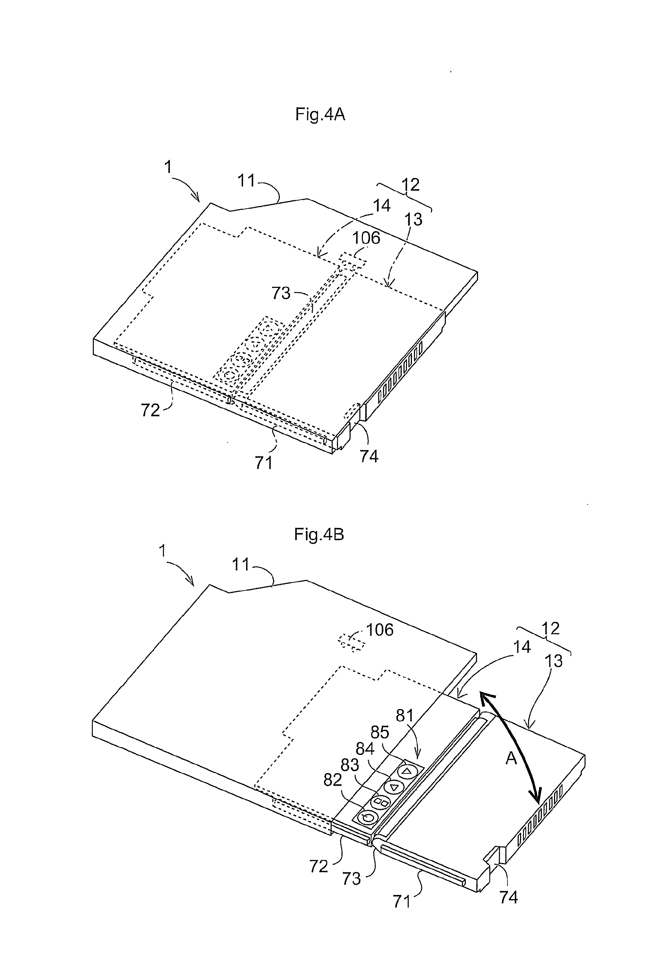

Figs. 4A and 4B are perspective views illustrating the image display device 1. Fig. 4A shows a stored state in which the movable body 12 is stored (or retracted) in the housing 11. Fig. 4B shows a use state in which the movable body 12 is drawn out (or ejected) from the housing 11.

Sliders 71 and 72 are provided along both side edges of the movable body 12, which includes the optical engine unit 13 and the control unit 14. The sliders 71 and 72 slide along guide rails (not shown) provided in the housing 11. The movable body 12 is ejected from and retracted into the housing 11 by a pushing and pulling operation by a user. In addition, a latch lock (not shown) is provided in the housing 11, so as to retain the movable body 12 in a stored (retracted) position.

The optical engine unit 13 and the control unit 14 are connected via a hinge portion 73. In the use state shown in Fig. 4B, the control unit 14 is supported by the guide rails of the housing 11, and the optical engine unit 13 is positioned completely outside the housing 11. As shown by arrow A, the optical engine unit 13 is rotatable with respect to the control unit 14. The optical engine unit 13 is rotatable from the position alongside the control unit 14, as shown in Fig. 4B, to the generally upright position with respect to the control unit 14.

An emission window 74 is provided in an end portion of the optical engine unit 13 opposite from the hinge portion 73. The laser light passing through the projection optical system 28 shown in Fig. 2 is emitted from the emission window 74. Accordingly, as shown in Fig. 1, the projection angle of the laser light can be adjusted by rotating the optical engine unit 13.

Further, as shown in Fig. 4B, an operation portion 81 is provided on an upper surface of the control unit 14. The operation portion 81 includes an operation button (operation portion) 82 for a power source, an operation button 83 for switching brightness and two operation buttons 84 and 85 for keystone correction. Thus, since the operation buttons 82 - 85 are provided on the control unit 14, the operation buttons 82 - 85 are not rattling (or shaking) at the time of operating them. Accordingly, the operation of the operation buttons 82 - 85 is easy.

The operation portion 81 is provided at a position that is covered by the housing 11 in the stored state shown in Fig. 4A, and is exposed in the use state shown in Fig. 4B. Thus, the operation buttons 82 - 85 become operable only in the use state. Accordingly, it is possible to avoid the operation buttons 82 - 85 being operated erroneously due to, e.g., the contact of the operation buttons 82 - 85 with other objects.

Especially, in case that the housing is flat shape as shown Figs.4A and 4B, there is not wide space for the operation portion 81. In such a case, it is possible to avoid the operation buttons 82 - 85 being operated erroneously.

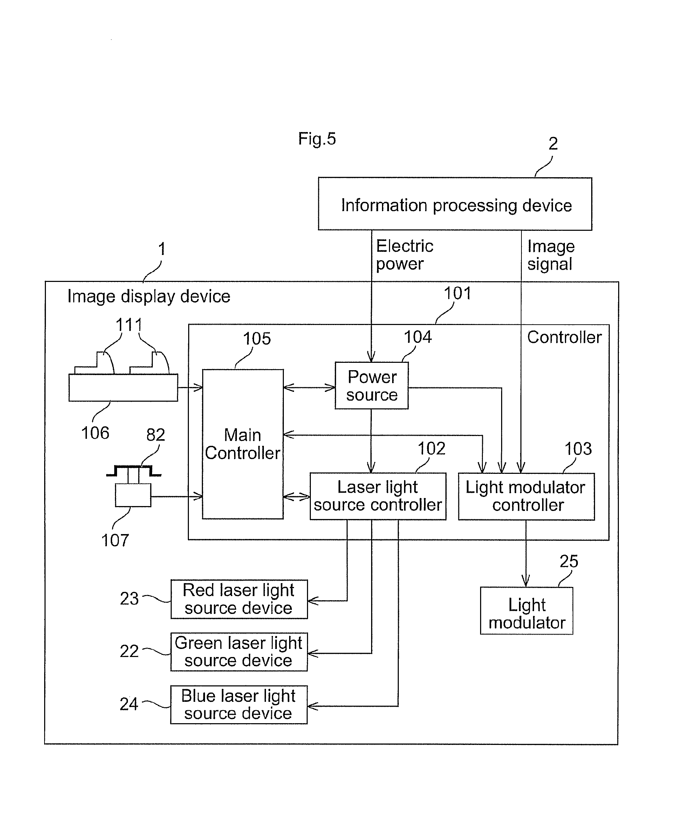

Fig. 5 is a block diagram illustrating a schematic configuration of the image display device 1. The controller 101 of the image display device 1 includes a laser light source controller 102 that controls the laser light source devices 22 - 24 of respective colors, a light modulator controller 103 that controls the light modulator 25 based on image signals input from the information processing device 2, a power source 104 that supplies electric power supplied from the information processing device 2 to the laser light source controller 102 and the light modulator controller 103, and a main controller 105 that controls the above-noted portions overall. The controller 101 is provided in the control unit 14 shown in Figs. 4A and 4B.

Further, as shown in Fig. 5, the image display device 1 includes a first switch 106 that turns ON in a use state in which the movable body 12 is drawn out from the housing 11, and a second switch 101 that turns ON in response to a user's operation of the operation button 82. Output signals from the first switch 106 and the second switch 107 are input to the main controller 105. The main controller 105 determines whether or not emission of laser light is allowed based on the output signals of the first switch 106 and the second switch 107.

In this embodiment, when both of the first switch 106 and the second switch 107 turn ON, emission of the laser light from the laser light source devices 22 - 24 is allowed, and thus, the laser light source controller 102 outputs drive signals to the laser light source devices 22 - 24 of respective colors, such that the laser light source devices 22 - 24 emit laser light.

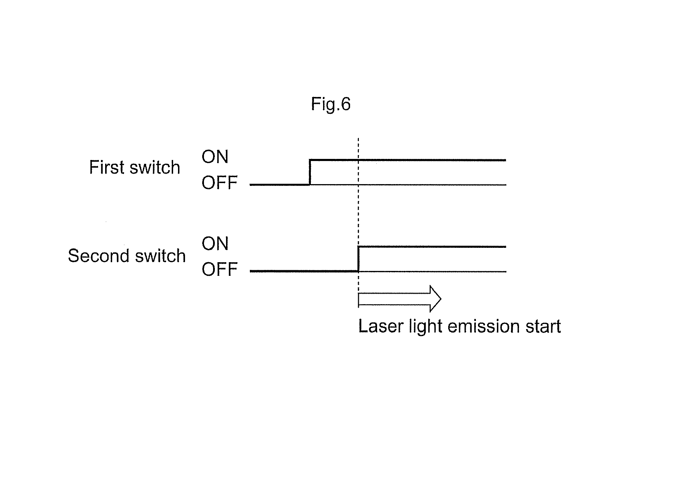

Fig. 6 is a time chart illustrating states of output signals of the first switch 106 and the second switch 107 at the beginning of use of the image display device. When a user draws out the movable body 12, the first switch 106 turns ON first. Then, when the user operates the operation button 82, the second switch 107 turns ON. At this time, both the first switch 106 and the second switch 107 are in an ON state, and thus, emission of laser light starts.

Specifically, the first switch 106 outputs the output signal as a first signal as shown in Fig. 6. The first signal indicates that the movable body 12 is ejected from the housing 11. The second switch 107 outputs the output signal as a second signal as shown in Fig. 6. The second signal indicates that the operating portion 81 is operated. The controller 101 causes the light source devices 22, 23, 24 to emit the light while the controller 101 detects both the first and second signals as shown in Fig. 6.

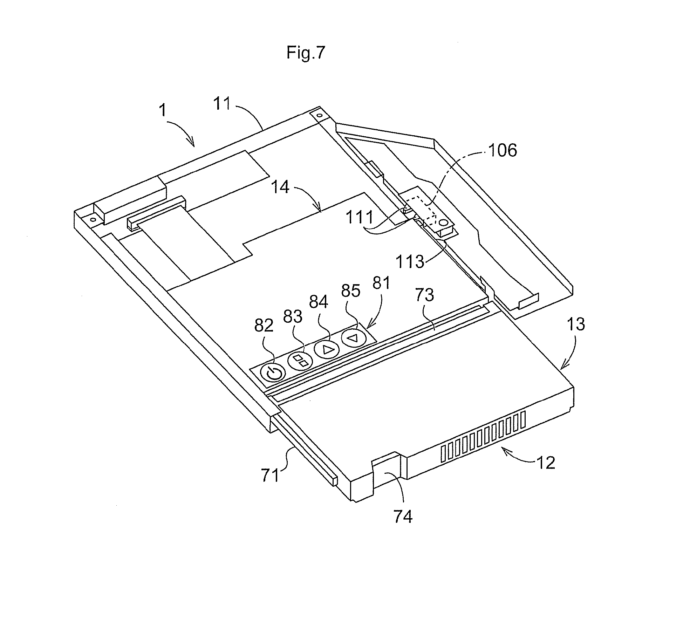

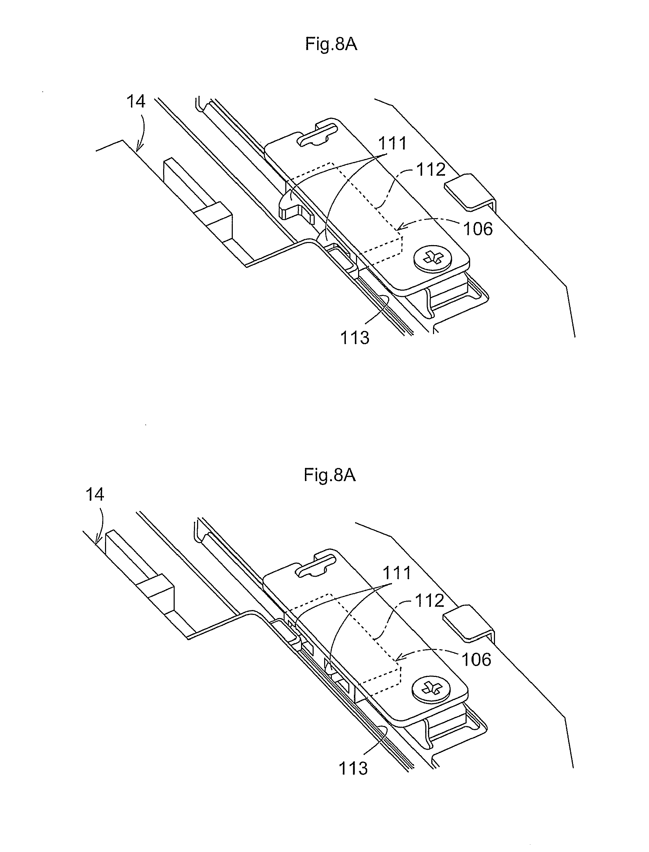

Fig. 7 is a perspective view illustrating the image display device 1 in a decomposed state. Figs. 8A and 8B are perspective views illustrating the first switch 106. Fig. 8A illustrates the first switch 106 in an ON state. Fig. 8B illustrates the first switch 106 in an OFF state.

As shown in Fig. 7, the first switch 106 is provided so as to contact a side edge portion of the control unit 14 of the movable body 12. The first switch 106 turns ON and OFF in response to an action of the contact 111, which contacts the control unit 14 according to the ejecting and retracting movement of the movable body 12 with respect to the housing 11.

More specifically, as shown in Figs. 8A and 8B, the first switch 106 is provided with two contacts 111. The contacts 111 are provided on a switch body 112, to be ejectable from and retractable into the switch body 112. The contacts 111 are biased (urged) by a spring (not shown) in an ejecting direction. On the other hand, the control unit 14 is provided along a side edge portion with an abutting portion 113, which abuts the contacts 111 of the first switch 106. When the abutting portion 113 moves to a position that aligns with the contacts 111, the abutting portion 113 presses the contacts 111 into the switch body 112.

In this embodiment, as shown in Fig. 8A, the first switch 106 turns ON when neither of the two contacts 111 is pressed into the switch body 112. On the other hand, as shown in Fig. 8B, the first switch 106 turns OFF when both of the contacts 111 are pressed into the switch body 112.

As shown in Fig. 7, the first switch 106 is positioned generally at the center of the housing 11 in a direction of ejection and retraction of the movable body 12. Accordingly, when the movable body 12 is stored in the housing 11 (i.e., in a stored state), the abutting portion 113 of the control unit 14 presses both of the two contacts 111 of the first switch 106 into the switch body 112, and thus the first switch 106 turns OFF. On the other hand, when the movable body 12 is drawn out from the housing 11 (i.e., in a use state), the abutting portion 113 of the control unit 14 is positioned apart from the contacts 111 of the first switch 106, and thus the first switch 106 turns ON. Thus, it is possible to securely detect that the movable body 12 is drawn out from the housing 11.

As described above, by providing the first switch 106, which turns ON in a use state in which the movable body 12 is drawn out from the housing 11, and the second switch 107, which turns ON in response to an operation of the operation button 82 by a user, laser light is emitted only when the operation button 82 is operated in the use state in which the movable body 12 is drawn out from the housing 11. Accordingly, even if the operation button 82 is erroneously operated by a stuck foreign object, laser light is not emitted. Thus, laser light can be securely prevented from being emitted in a nonuse state.

In the above-described embodiment, as shown in Fig. 5, the output signals from the first switch 106 and the second switch 107 are both input to the main controller 105. However, the first switch 106 may serve as a power source switch that turns ON and OFF a supply of electric power to the controller 101, and only the output signal from the second switch 107 may be input to the main controller 105.

Further, in this embodiment, the image display device 1 is integrated into a notebook information processing device 2. However, the image display device 1 can be integrated into other portable information terminal devices. In addition, the image display device may be provided as a device separate from the information terminal device that outputs image signals, and may be connected to the information terminal device via a cable.

In the above-described embodiment, the movable body 12 includes the optical engine unit 13, however as long as the movable body 12 includes at least the projection optical system28, the other elements such as the laser source devices 22, 23, 24 and light modulator 25 are accommodated by the housing 11.

In the above-described embodiment, the light source is the laser light, however the light source is not limited to the laser light. The other type of light source, for example LED (Light-Emitting Diode), can be applied to the present invention.

An exemplary image display device according to the present invention, the first switch may be provided on one of the movable body and the housing. The first switch may turn ON and OFF in response to an action of a contact that contacts the other of the movable body and the housing in accordance with movement of the movable body ejecting from and retracting into the housing. Accordingly, the first switch can securely turn ON and OFF in accordance with the movement of the movable body that ejects from and retracts into the housing.

The operation portion of the second switch may be positioned on the movable body such that the operation portion is covered by the housing in a stored state in which the movable body is retracted into the housing, and is exposed in the use state in which the movable body is ejected from the housing. Thus, the operation portion is operable when the movable body is ejected from the housing, and is inoperable when the movable body is retracted into the housing. Accordingly, an erroneous operation of the operation portion by contact with another object can be prevented.

The movable body may include a first unit including at least the projection optical system, and a second unit that rotatably supports the first unit. The second unit may include the controller and the operation portion. Accordingly, a projection angle of laser light emitted from an optical engine unit can be adjusted and projected on a screen appropriately. Further, by providing the operation portion on a control unit (second unit), the operation portion can be prevented from rattling (shaking) during an operation of the operation portion, and thus, it is possible to make the operation of the operation portion easy. Moreover, by providing the controller and the operation portion on the control unit, it is possible to simplify the wiring between the second switch, which is operated by the operation portion, and the controller.

The image display device may be accommodated in a space provided in a notebook information processing device, such that the image display device is replaceable with an optical disc device. Accordingly, the convenience of the information processing device can be improved. In this circumstance, since there is a demand to make the housing of the information processing device thin, a large accommodation space cannot be secured. However, according to the above-described configuration, it is not necessary to secure a large gap in a periphery of the operation portion to prevent an erroneous operation of the operation portion by a stuck foreign object. Accordingly, design flexibility can be improved. The optical disc device performs at least one of recording and playing back of information in an optical disc, such as a blue-ray disc, DVD, a CD, etc.

An further exemplary image display device according to the present invention, an aspect of the present invention provides an image display device for displaying an image on a screen by emitting light, the image display device comprising: a housing; a movable body that is ejectable from and retractable into the housing, a light source device that is provided with the movable body and that is arranged for emiting the light; a projection optical system that is provided with the movable body or the housing and that is arranged for projecting on the screen the light emitted by the light source device, wherein the light source device is capable of emitting light while the movable body is ejected from the housing, and the light source device is not capable of emitting light while the movable body is retracted into the housing.

According to this configuration, the light is emitted only when the operation portion is operated in a state where the movable body is ejected from the housing. Accordingly, even if the operation portion is erroneously operated by a stuck foreign object, the light is not emitted. Thus, the light is securely prevented from being emitted in a nonuse state.

The image display device may further comprise a controller that is provided with the housing or the movable body and that is arranged for controlling emission of the light. The controller may be further arranged for detecting a first signal and a second signal. The first signal indicates that the movable body is ejected from the housing, and the second signal indicates that a operating portion is operated. The controller may be further arranged for causing the light source device to emit the light while the controller detects both the first and second signals. Accordingly, whether or not the movable body is ejected from the housing can be electrically detected.

The image display device may further comprise a first switch that is arranged for turning ON in a use state in which the movable body is ejected from the housing; and a second switch that is arranged for turning ON in response to an operation of an operating portion for the emission of the light. The light may be arranged for emitting from the light source device while both of the first switch and the second switch turn ON. Accordingly, the first switch can securely turn ON and OFF in accordance with the movement of the movable body that ejects from and retracts into the housing.

The image display device may further comprise a light modulator that is arranged for modulating the light emitted from the light source device based on an image signal; and a controller that is arranged for controlling the light source device and the light modulator. The light source device may include a plurality of light source devices that is arranged for emitting light of respective colors. The housing may accommodate the plurality of light source devices, the light modulator, the projection optical system and the controller. The movable body may include at least the projection optical system.

The housing may have flat shape. Accordingly, even if the operation portion is erroneously operated by a stuck foreign object because of the flat shape, the light is not emitted. Thus, the light is securely prevented from being emitted in a nonuse state.

The light may be laser light. Accordingly, the laser light is securely prevented from being emitted in a nonuse state.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image display device (1) for displaying an image on a screen (S) by emitting light, the image display device comprising:
a housing (11);
a movable body (12) that is ejectable from and retractable into the housing,
a light source device (22, 23, 24) that is provided with the movable body and that is arranged for emiting the light;
a projection optical system (28) that is provided with the movable body or the housing and that is arranged for projecting on the screen the light emitted by the light source device,
wherein the light source device is capable of emitting light while the movable body is ejected from the housing, and the light source device is not capable of emitting light while the movable body is retracted into the housing.

2. The image display device according to claim 1, further comprising:
a controller (101) that is provided with the housing or the movable body and that is arranged for controlling emission of the light; and
wherein the controller is further arranged for detecting a first signal and a second signal, the first signal indicating that the movable body is ejected from the housing, and the second signal indicating that a operating portion (81) is operated, and
wherein the controller is further arranged for causing the light source device to emit the light while the controller detects both the first and second signals.

3. The image display device according to claim 1, further comprising:
a first switch (106) that is arranged for turning ON in a use state in which the movable body is ejected from the housing; and
a second switch (107) that is arranged for turning ON in response to an operation of an operating portion (81) for the emission of the light,
wherein the light is arranged for emitting from the light source device while both of the first switch and the second switch turn ON.

4. The image display device according to claim 3, further comprising:
a light modulator (25) that is arranged for modulating the light emitted from the light source device based on an image signal; and
a controller (101) that is arranged for controlling the light source device and the light modulator,
wherein the light source device includes a plurality of light source devices (22, 23, 24) that is arranged for emitting light of respective colors;
wherein the housing accommodates the plurality of light source devices, the light modulator, the projection optical system and the controller; and
wherein the movable body includes at least the projection optical system.

5. The image display device according to claim 3 or 4,
wherein the first switch is provided on one of the movable body and the housing, wherein the first switch is arranged for turning ON and OFF in response to an action of a contact that contacts the other of the movable body and the housing in accordance with movement of the movable body ejecting from and retracting into the housing.

6. The image display device according to any one of claims 3 through 5, wherein the operation portion of the second switch is positioned on the movable body such that the operation portion is covered by the housing in a stored state in which the movable body is retracted into the housing, and is exposed in the use state in which the movable body is ejected from the housing.

7. The image display device according to any one of claims 3 through 6, wherein the movable body comprises a first unit that includes at least the projection optical system, and a second unit that is arranged for rotatably supporting the first unit.

8. The image display device according to claim 7, wherein the second unit comprises the controller.

9. The image display device according to claim 7 or 8, wherein the operation portion of the second switch is positioned on the second unit.

10. The image display device according to claim 5, wherein the first switch is positioned substantially at a center of the housing in a direction in which the movable body is ejected and retracted.

11. The image display device according to any one of claims 3 through 10, wherein the image display device is arranged for being accommodated in a space provided in a notebook information processing device (2), such that the image display device is replaceable with an optical disc device.

12. The image display device according to any one of claims 2 through 11, wherein the housing has flat shape.

13. The image display device according to any one of claims 1 through 12, wherein the light is laser light.

14. A information processing device (2), comprising:
a display;
an image display device (1) according to any of claims 1 to 13.

15. A method for preventing, in a nonuse state of an image display device (1), light emitting from the image display device, wherein the image display device is for displaying the image on a screen (S), the image display device having a housing (11) and a movable body (12) that is ejectable from and retractable into the housing, a light source device (22, 23, 24) that is provided with the movable body and that emits the light, and a projection optical system (28) that is provided with the movable body or the housing that projects on the screen the light emitted by the light source device, the method comprising:
detecting whether the movable body (12) is ejected from or retracted into the housing (11); and
preventing the light from being emitted by the light source device while the movable body is retracted into the housing.
